# EUROPÄISCHE PATENTANMELDUNG

(11) **EP 4 114 050 A1**
(43) Veröffentlichungstag der Anmeldung: **04.01.2023**
(21) Anmeldenummer: 21182801.7
(22) Anmeldetag: 30.06.2021
(51) Int. Cl.: H04W 4/70, G06F 21/33, G06F 21/12, G06Q 30/00

(54) **ÜBERPRÜFUNG EINER LIZENZ FÜR DIE NUTZUNG MINDESTENS EINES LEISTUNGSMERKMALS IN EINEM INTERNET DER DINGE (IOT)-GERÄT**

(71) Anmelder: Siemens Aktiengesellschaft, 80333 München (DE)
(72) Erfinder: Falk, Rainer, 85586 Poing (DE); Ries, Sebastian, 81927 München (DE); Seltzsam, Stefan, 85653 Aying (DE); Wimmer, Martin, 85579 Neubiberg (DE)

(57) **Zusammenfassung**

Überprüfung einer Lizenz für die Nutzung mindestens eines Leistungsmerkmals in einem Internet der Dinge (IoT)-Gerät Verfahren zur Überprüfung einer Lizenz für die Nutzung mindestens eines Leistungsmerkmals in einem Internet der Dinge (IoT)-Gerät (50) anhand eines Lizenzkenners (LK), umfassend
- Festlegen mindestens einer Lizenzbedingung für die Nutzung des Leistungsmerkmals des IoT-Geräts (50) durch mindestens ein im Lizenzkenner (LK) enthaltenes Attribut,
- Übertragen und Speichern des Lizenzkenners (LK) auf das I-oT-Gerät (50),
- Prüfen der Lizenzbedingungen durch
a) Erzeugen eines dem Leistungsmerkmal des IoT-Geräts (50) zugeordneten Pseudozugriffs durch eine auf dem IoT-Gerät (50) ausgebildete Pseudo-Halter-Einheit (52), und
b) Überprüfen einer Berechtigung für den Pseudozugriff durch Prüfen der Attribute des Lizenzkenners (LK) durch eine auf dem IoT-Gerät (50) ausgebildete Verifizierungseinheit (53), und

- Aktivieren des mindestens einen Leistungsmerkmals, wenn der Pseudozugriff durch ein positives Prüfergebnis des Lizenzkenners (LK) als erlaubt bestätigt wird,
wobei der Lizenzkenner (LK), die Pseudo-Halter-Einheit (52) und die Verifizierungseinheit (53) basierend auf einer Spezifikation zu Verifizierbaren Berechtigungsnachweisen (Verifiable Credentials) eines ausgebildet sind.

## Beschreibung

Die Erfindung betrifft ein Verfahren zur Überprüfung einer Lizenz für die Nutzung mindestens eines Leistungsmerkmals in einem Internet der Dinge (IoT)-Gerät anhand eines Lizenzkenners.

Die Lizenzierung von Software bzw. einzelnen Features einer Software ist eine gängige Anforderung, welche sich sowohl im Consumer-Bereich wie auch im Enterprise-Umfeld und für industrielle Anwendungen stellt. Neben der Lizenzierung von Software können auch Funktionen auf Geräten abhängig von einer Lizenz freigeschaltet werden. Geräte, wie beispielsweise ein IoT Edge Device, eine Maschine oder auch Kraftfahrzeuge werden einmal hergestellt und vertrieben. Ein IoT Edge Device ist eine mit einem Kommunikationsnetzwerk verbundene Komponente, die sich am Netzwerkrand befindet und für den Netzwerkübergang zu einem Kernnetz eines Unternehmens oder eines Service Providers sorgt.

Der Leistungsumfang bzw. die Features, die ein Nutzer während der Lebensdauer der Geräte nutzt, ist jedoch nicht fest vorgegeben und kann abhängig von Lizenzmodellen variieren. Anbieter solcher höherwertigen Dienste wenden häufig Lizenzierungsmodelle an, welche sich auf die Art und Qualität der zu bewertenden Daten und Funktionen beziehen. So kann beispielsweise eine Anbindung an Cloud-Systeme über bestimmte Protokolle oder die Verwendung bestimmter Datentypen an Lizenzen gebunden sein. Auch können zunehmend industrielle Funktionen, wie z.B. eine Steuerung einer Werkzeugmaschine oder einer Substation, in Software realisiert und vermarktet werden, die auf generischer White-Box-Hardware wie beispielsweise einem Industrial PC oder einer Edge Computing Plattform bereitgestellt werden. Edge Computing bezeichnet dabei eine dezentrale Datenverarbeitung, die am Rand des Netzwerks ausgeführt wird.

Gelöst wird dies bislang z.B. über Kontrollmechanismen, welche hierzu Vertrags- / Lizenzinformationen abfragen und auswerten können, wozu die Geräte typischerweise über Web-Konnektivität verfügen und Backendsysteme auf Seiten des Lizenzgebers in die Auswertung eingebunden sind. In Fällen, in denen keine oder keine dauerhaft bestehende Verbindung zu Systemen des Anbieters verfügbar sind, werden in der Regel Lizenz-Dateien und/oder Hardware-Dongles eingesetzt, worüber Lizenzen fest eingespielt werden. Häufig werden kryptographisch geschützte Lizenzinformationen über Lizenzdateien oder einen kryptographisch gebildeten Lizenzcode ausgeliefert. Diese werden von dem entsprechenden Softwareprodukt oder Gerät eingelesen, verifiziert und ausgewertet.

Die angesprochenen Lösungen beziehen sich auf den Lizenzschutz und den Integritätsschutz von Software. Software wird geschützt, beispielsweise verschlüsselt, ausgeliefert und ist nur mit Hilfe eines geeigneten Dongles (Keys, welcher eine entsprechende Lizenz umsetzt) nutzbar. Dies bezieht sich insbesondere darauf, dass Geräte und die darauf ausgeführte Software kundenseitig im Einsatz sind, d.h. sich nicht mehr im direkten Zugriff und der Kontrolle des Herstellers befinden, so dass man sich vor etwaiger Manipulation/Lizenzumgehung durch den Endanwender schützen möchte.

Die Arbeiten der Verifiable Credentials (VC) Working Group in Kombination mit Arbeiten der Decentralized Identifiers (DID) Working Group, siehe z.B. auch https://www.w3.org/TR/did-usecases/ des World Wide Web Konsortiums, kurz W3C, befassen sich mit der standardisierten Beschreibung von Eigenschaften/ Zusicherungen, auch claims genannt, welche überprüfbar/verifizierbar sind, siehe Data Model https://www.w3.org/TR/vc-data-model/. Eine wesentliche Eigenschaft von Verifiable Credentials (VC), im Weiteren auch als verifizierbare Berechtigungsnachweise bezeichnet, ist, dass diese maschinell verifizierbar sind. Sie eignen sich daher für unterschiedliche Anwendungsfälle wie beispielsweise dem Nachweis von Zertifizierungen und personenbezogenen Daten wie Ausweisdaten, zur online Beantragung von Dokumenten oder Zugängen. Auf https://www.w3.org/TR/vc-use-cases werden diverse Anwendungsfälle wie unter anderem die Nutzung von VC zur Verifizierung der Herkunft/Echtheit von Geräten, oder der Erkennung und dem Ausschluss von Fälschungen/Plagiate, beschrieben. Eine Nutzung von VC für Lizenzierung ist zum einen dort nicht beschrieben, das VC zugrundeliegende System-Modell passt jedoch auch konzeptionell nicht für eine Lizenzierung.

Es ist somit eine Aufgabe der vorliegenden Erfindung, eine verbesserte Lizenzprüfung insbesondere für dynamische Anwendungsfälle, in denen während des Betriebs eines Gerätes Lizenzen erneuert oder geändert werden müssen, besser und sicher zu unterstützen und mit geringem Entwicklungsaufwand bereitzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Überprüfung einer Lizenz für die Nutzung mindestens eines Leistungsmerkmals in einem Internet der Dinge (IoT)-Gerät anhand eines Lizenzkenners, umfassend
- Festlegen mindestens einer Lizenzbedingung für die Nutzung des Leistungsmerkmals des IoT-Geräts durch mindestens ein im Lizenzkenner enthaltenes Attribut,
- Übertragen und Speichern des Lizenzkenners auf das IoT-Gerät,
- Prüfen der Lizenzbedingungen durch
   a) Erzeugen eines dem Leistungsmerkmal des IoT-Geräts zugeordneten Pseudozugriffs durch eine auf dem IoT-Gerät ausgebildete Pseudo-Halter-Funktion, und
   b) Überprüfen einer Berechtigung für den Pseudozugriff durch Prüfen der Attribute des Lizenzkenners durch eine auf dem IoT-Gerät ausgebildete Verifizierungsfunktion, und
- Aktivieren des mindestens einen Leistungsmerkmals, wenn der Pseudozugriff durch ein positives Prüfergebnis des Lizenzkenners als erlaubt bestätigt wird,
wobei der Lizenzkenner, die Pseudo-Halter-Einheit und die Verifizierungseinheit basierend auf eine Spezifikation zu Verifizierbaren Berechtigungsnachweisen des World Wide Web Konsortiums (W3C) ausgebildet sind.

Die Lizenzprüfung in dem IoT-Gerät wird durch einen Pseudozugriff auf ein dem lizenzierten Leistungsmerkmal zugeordneten Lizenzkenner durch den Pseudo-Halter mit Funktionen und Prozessen basierend auf der Verifiable Credential Spezifikation des Word-Wide-Web Consortiums nachgebildet. Aufgrund der anderen Zielsetzung im Falle der Lizenzprüfung verglichen mit einer üblichen Nutzung von DID/VC bei einer Authentisierung zwischen einem Nutzer und einem Knoten sind jedoch Anpassungen der Basistechnologie notwendig. Ein wesentlicher Unterschied besteht darin, dass sowohl die Pseudo-Halter-Einheit und als auch die Verifizierungseinheit im IoT-Gerät ausgebildet sind, d.h. dass die Pseudo-Halter-Einheit und die Verifizierungseinheit im gleichen IoT-Gerät realisiert sind. Die der Pseudo-Halter-Einheit entspricht dabei einer modifizierten Rolle des Halters, auch "holder" genannt, der VC-Spezifikation. Die Verifizierungseinheit entspricht dabei einer modifizierten Rolle des Verifizierers, auch "verifier" genannt, der VC-Spezifikation.

Das IoT-Gerät kann beispielsweise ein Steuergerät eines cyber-physischen Systems, z.B. eines industriellen Automatisierungssystems, oder ein Kommunikationsgerät sein. Die Lizenz betrifft Leistungsmerkmale insbesondere aus der physikalischen Welt. Beispiele für Leistungsmerkmale in einem IoT-Gerät, insbesondere in einem IoT Edge-Geräte sind eine Unterstützung bestimmter Protokolle, höhere/niedrigere Abtastraten oder Genauigkeiten von Sensordaten. Beispiel für Leistungsmerkmale in einem Kraftfahrzeug sind veränderte Beschleunigungsmodi mit höherer oder geringer Leistung, autonomes Fahren oder zusätzliche Online-Services und dergleichen. Im Weiteren wird das IoT-Gerät auch synonym als Gerät bezeichnet.

Dies hat den Vorteil, dass eine Decentralized Identifiers (DID)/Verifiable Credential (VC)-Infrastruktur und entsprechende Tools und Bibliotheken für die Realisierung eines Lizenzschutzes verwendet werden können, sodass keine spezifische technische Lösung zur Verwaltung und Prüfung von Lizenzen entwickelt werden muss. Eine allgemeine DID/VC-Infrastruktur, die z.B. für Authentisierung und Berechtigungsverwaltung von Nutzern verwendet wird, kann mitverwendet werden, um eine Lizenzprüfung zu realisieren. Dadurch kann eine Lizenzierungslösung mit weniger Aufwand realisiert und betrieben werden als bei Nutzung spezieller Lizenzierungstools.

In einer vorteilhaften Ausführungsform wird der Lizenzkenner vor oder während dem Betrieb des Geräts auf dem Gerät gespeichert.

Dies hat den Vorteil, dass der Lizenzkenner und damit die Lizenzbedingungen nicht nur vor der Inbetriebnahme des Geräts festgelegt und in das Gerät eingebracht werden, sondern Lizenzbedingungen auch während des Betriebs auf das Gerät aufgebracht werden können. Des Weiteren können Geräte unabhängig von der späteren Nutzung gefertigt werden und erst später zur Betriebszeit kann festgelegt werden, wofür das Gerät verwendet wird.

In einer vorteilhaften Ausführungsform wird der Lizenzkenner während des Betriebs des IoT-Geräts auf das IoT-Gerät erneut übertragen und der gespeicherte Lizenzkenner ersetzt oder ergänzt.

Dies hat den Vorteil der Lizenzkenner und damit die Lizenzbedingungen während der Lebensdauer des Geräts erneuert und/oder ergänzt werden können.

In einer vorteilhaften Ausführungsvariante wird das Übertragen des Lizenzkenner von einem Lizenzserver an das IoT-Gerät von außerhalb des IoT-Geräts initiiert und an das IoT-Gerät gesendet. Alternativ wird das Übertragen des Lizenzkenners von einer Applikation auf dem IoT-Gerät selbst initiiert. Der Lizenzkenner wird in diesem Fall vom IoT-Gerät beim Lizenzserver abgerufen.

In einer vorteilhaften Ausführungsvariante wird der Pseudozugriff beim Start des IoT-Gerätes oder beim Start des Leistungsmerkmals auf dem IoT-Gerät und/oder während des Betriebs wiederholt erzeugt und überprüft.

Dadurch wird der Zeitpunkt für die Durchführung der Lizenzprüfung festgelegt. Die Lizenzprüfung erfolgt insbesondere zum Zeitpunkt des Starts des Lizenz-behafteten Leistungsmerkmals oder beim Start des IoT-Geräts. Optional können im laufenden Betrieb weitere Pseudozugriffe erzeugt werden, und abhängig vom Ergebnis der Prüfung das Leistungsmerkmal zu einem späteren Zeitpunkt aktiviert oder freigegeben werden, oder bei negativem Prüfungsergebnis das Leistungsmerkmal deaktiviert oder gesperrt werden.

In einer vorteilhaften Ausführungsvariante ist das IoT-Gerät als ein physisch eigenständig vorliegendes Gerät ausgebildet oder als ein auf einer oder mehreren Hardware-Plattformen verteiltes Software-basiertes virtuelles Gerät ausgebildet.

Die Überprüfung der Lizenz kann somit flexibel auf unterschiedlich ausgebildeten IoT-Geräten durchgeführt werden. Die vorgeschlagene Lizenzprüfung ist somit sowohl auf realen, physisch vorliegenden Geräten als auch auf virtuell ausgebildeten Geräten durchführbar. Die Hardware-Plattform kann insbesondere eine Hardware-basierte "Compute Platform" sein.

In einer vorteilhaften Ausführungsvariante wird die Pseudo-Halter-Einheit des IoT-Geräts als Teil einer Software-Anwendung, als Teil einer Ausführungsumgebung der Software-Anwendung oder durch ein Betriebssystem des IoT-Geräts ausgebildet.

Ist das IoT-Gerät als virtualisiert ausgebildet, so liegt es beispielsweise als Virtual Machine (VM)-Image oder als Container-Image vor. Wenn ein solches Image ausgeführt wird, wird das IoT-Gerät als Ganzes "real" existent. Ein entsprechendes Image umfasst dann das Betriebssystem und Applikationen ebenso, wie es bei einem Hardware-basierten Gerät der Fall wäre.

In einer vorteilhaften Ausführungsvariante sind die Pseudo-Halter-Einheit und die Verifizierungseinheit auf einer gemeinsamen Hardware-Plattform ausgebildet. Alternativ sind die Pseudo-Halter-Einheit und die Verifizierungseinheit auf unterschiedlichen, lokal miteinander verbundenen Plattformen ausgebildet.

Dies erlaubt eine Überprüfung der Lizenz auch auf verteilt strukturierten IoT-Geräten. Des Weiteren kann durch die Verteilung der Pseudo-Halter-Einheit und die Verifizierungseinheit auf unterschiedliche Hardware-Plattformen eine Geräteinterne jedoch Plattform-spezifische Lizenzvergabe implementiert werden.

In einer vorteilhaften Ausführungsvariante wird durch die Verifizierungseinheit ein Wer-Attribut im Lizenzkenner, der ein zur Aktivierung des Leistungsmerkmals berechtigtes IoT-Gerät angibt, gegenüber einer Verifizierungs-Plattform-Kennung der Verifizierungsplattform überprüft.

Das Wer-Attribut kann bevorzugt durch ein "subject"-Attribut in einem Verifizierbaren Berechtigungsnachweis VC entsprechend der W3C VC Spezifikation ausgebildet sein. Durch das Wer-Attribut kann insbesondere eine an eine bestimmte Geräteinstanz oder an eine Komponente eines Geräts gebundene Lizenz geprüft und durchgesetzt werden. Das Wer-Attribut gibt das Gerät an, für welches die Lizenz bestimmt ist. Es können in das Wer-Attribut noch weitere Umgebungsinformationen wie beispielsweise Betreiber-ID, Ort, Laufzeitumgebung, Software-Applikation, Gerätetyp, oder Version aufgenommen werden. Ist das Wer-Attribut leer, also nicht belegt, wird keine Überprüfung gegenüber einer ausführenden Einheit des Leistungsmerkmals durchgeführt.

In einer vorteilhaften Ausführungsvariante wird durch die Verifizierungseinheit ein Was-Attribut im Lizenzkenner, das weitere Bedingungen zur Aktivierung des Leistungsmerkmals oder zur Aktivierung von Optionen des Leistungsmerkmals angibt, überprüft.

Die Verifizierungseinheit akzeptiert den Lizenzkenner nur dann, wenn die im Was-Attribut bestätigten Attribute, die die betreffende zulässige Ausführungsumgebung charakterisieren, mit den ermittelten Charakteristika der Ausführungsumgebung des Leistungsmerkmals übereinstimmen. Somit können die Lizenzbedingungen überprüft und durchgesetzt werden. Charakteristika der Ausführungsumgebung sind beispielsweise eine Betreiber-Kennung, Ort, Laufzeitumgebung, Software-Applikation, Typ und/oder Version des IoT-Geräts.

In einer vorteilhaften Ausführungsvariante wird durch die Verifizierungseinheit ein Sicherheits-Attribut im Lizenzkenner, das eine kryptographische Kennung eines Ausstellers des Lizenzkenners umfasst, gegenüber geprüft.

Der Lizenzkenner wird nur dann als gültig durch die Verifizierungseinheit geprüft und der Pseudozugriff als erlaubt bestätigt, wenn das Sicherheits-Attribut bestätigt wird. Das Sicherheits-Attribut umfasst beispielsweise eine Signatur einer bekannten und vertrauenswürdigen Lizenzierungsstelle.

In einer vorteilhaften Ausführungsvariante wird ein erster Lizenzkenner von einer IoT-Geräte-externen Lizenzerstellungseinheit und/oder ein zweiter Lizenzkenner von einer IoT-Geräte-internen Lizenzerstellungseinheit ausgestellt und auf dem IoT-Gerät gespeichert, und
der erste Lizenzkenner gibt Eigenschaften der Ausführungsumgebung, in welcher die Verifizierungseinheit ausgeführt wird, vor,
der zweite Lizenzkenner umfasst die tatsächlich im IoT-Gerät vorliegenden Eigenschaften, und
der erste und zweite Lizenzkenner werden durch die Verifizierungseinheit der Lizenzkenner gegenüber den Eigenschaften der vorliegenden Ausführungsumgebung der Verifizierungseinheit überprüft.

Der Lizenzkenner kann somit nicht nur als ein erster Lizenzkenner von einer außerhalb des IoT-Geräts angeordneten Lizenzerstellungseinheit, sondern auch von einer im IoT-Gerät integrierten Lizenzerstellungseinheit ausgestellt werden. Die Verifizierungseinheit überprüft, ob die Angaben zur erforderlichen Ausführungsumgebung im Lizenzkenner mit den Angaben zur tatsächlichen Ausführungsumgebung in der VC-Plattforminformation übereinstimmen.

In einer weiteren Ausführungsvariante wird ein dritter Lizenzkenner von einer IoT-Geräte-externen Bestätigungs-Ausstellungseinheit ausgestellt. Der dritte Lizenzkenner bestätigt eine IoT-Geräteeigenschaft, beispielsweise dass das Gerät nicht als manipuliert von einem Security-Monitoring-System erkannt wurde und somit als nicht manipuliert erachtet wird. Die IoT-Geräte-externe Bestätigungs-Ausstellungseinheit ist dabei üblicherweise unterschiedlich von der den ersten Lizenzkenner ausstellenden IoT-Geräte-externen Ausstellungseinheit.

In einer vorteilhaften Ausführungsvariante ist der Lizenzkenner als anonymer Verifizierbarer Berechtigungsnachweis ausgebildet und die Verifizierungseinheit prüft lediglich ein Vorliegen von mindestens einem bestimmten Attribut, jedoch nicht den Inhalt des Attributs.

Ein anonymer Verifizierbarer Berechtigungsnachweis ermöglicht es lediglich zu ermitteln, ob bestimmte Attribute vorliegen, d.h. als zutreffend durch den Lizenzkenner bestätigt werden.

In einer vorteilhaften Ausführungsvariante ist das Leistungsmerkmal ein Software-Container, und der Lizenzkenner wird zur Verwaltung und Steuerung einer Software-Container-Infrastruktur verwendet. Alternativ ist das Leistungsmerkmal eine Software-Anwendung oder eine Hardware-Komponente des I-oT-Gerätes.

Somit kann der Lizenzkenner in unterschiedlichen technischen Bereichen flexibel verwendet werden.

Ein zweiter Aspekt der Erfindung betrifft eine Anordnung zur Überprüfung einer Lizenz für die Nutzung mindestens eines Leistungsmerkmals in einem Internet der Dinge (IoT)-Gerät anhand eines Lizenzkenners, umfassend
eine Lizenzausstellungseinheit, die derart ausgebildet ist,
- mindestens eine Lizenzbedingung für die Nutzung des Leistungsmerkmals des IoT-Geräts durch mindestens ein im Lizenzkenner enthaltenes Attribut festzulegen,
- den Lizenzkenner auf das IoT-Gerät zu übertragen, und
   das IoT-Gerät derart ausgebildet ist,
- den Lizenzkenner zu speichern,
- die Lizenzbedingungen zu prüfen durch
   a) Erzeugen eines dem Leistungsmerkmal des IoT-Geräts zugeordneten Pseudozugriffs durch eine auf dem IoT-Gerät ausgebildete Pseudo-Halter-Einheit, und
   b) Überprüfen einer Berechtigung für den Pseudozugriff durch Prüfen der Attribute des Lizenzkenners durch eine auf dem IoT-Gerät ausgebildete Verifizierungseinheit, und
- das mindestens eine Leistungsmerkmal zu aktivieren, wenn der Pseudo-zugriff durch ein positives Prüfergebnis des Lizenzkenners als erlaubt durch die Verifizierungseinheit bestätigt wird,
wobei der Lizenzkenner, die Pseudo-Halter-Einheit und die Verifizierungseinheit basierend auf eine Spezifikation zu Verifizierbaren Berechtigungsnachweisen (Verifiable Credentials) des World Wide Web Konsortiums (kurz W3C) ausgebildet sind.

Das Verfahren und die Anordnung ermöglichen eine einfache und automatisierbare Lizenzausbringung während der Laufzeit, d.h. wenn das IoT-Gerät und Applikationen in Betrieb sind. Damit eignet sich das Verfahren und die Anordnung insbesondere auch für den industriellen Einsatz, d.h. in Fällen, wenn häufig kein direkter manueller Zugriff auf ein Gerät möglich ist. Erst zur Laufzeit bzw. nach erfolgreicher Lizenzierung ist festgelegt, welche Funktionalität dem Lizenzinhaber zur Verfügung steht. Dabei kann ein Gerät derart ausgeprägt sein, dass es Initialisierungsschnittstellen zur Verfügung stellt, über welche die Lizenz in Form des Lizenzkenners sicher aufgespielt werden kann. Damit sind Lizenzbestimmungen während der Nutzungsdauer anpassbar/austauschbar. Die Lizenzauswertung kann feingranular umgesetzt werden und dabei neben des Geräte-Kontexts, beispielsweise eine Prüfung der Hardware-Instanz, auch die nähere Umgebung, beispielsweise eine Identifikation des Nutzers über DID miteinschließen. Wird das Gerät z.B. in einer anderen Umgebung aufgebaut, so kann in diesem Fall eine nicht autorisierte Nutzung kontrolliert eingeschränkt/verhindert werden.

Durch Nutzung von VC und DID ist eine Umsetzung der Lizenzevaluierung auch in offline Szenarien möglich. D.h. die Geräte benötigen keine dauerhafte Verbindung mit einem Lizenzserver, so dass sich dadurch auch der Einsatz in abgetrennten Netzen eignet. Generell übertragen sich die Vorteile von DID und VC auf das gezeigte Lizenzverfahren. So müssen Lizenzgeber oder Lizenzinhaber nur die für die Lizenzprüfung benötigten Informationen für die Validierung bereitstellen.

Ein dritter Aspekt der Erfindung betrifft ein Computerprogrammprodukt, umfassend ein nicht flüchtiges Computerlesbares Medium, das direkt in einen Speicher eines digitalen Computers ladbar ist, umfassend Programmcodeteile, die bei Ausführung der Programmcodeteile durch einen digitalen Computer diesen veranlassen, die Schritte des Verfahrens durchzuführen.

Sofern es in der nachfolgenden Beschreibung nicht anders angegeben ist, beziehen sich die Begriffe "festlegen", "übertragen", "prüfen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Die jeweilige "Einheit", zum Beispiel Lizenzausstellungseinheit oder das IoT-Gerät, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und des erfindungsgemäßen Systems sind in den Zeichnungen beispielhaft dargestellt und werden anhand der nachfolgenden Beschreibung näher erläutert. Es zeigen:
- Fig. 1: ein Rollenmodell der Verifizierbaren Berechtigungsnachweise, im Englischen als Virtual Credentials, entsprechend der W3C Spezifikation "VC-data model";
- Fig. 2: ein Ausführungsbeispiel des erfindungsgemäßen Verfahrens in Form eines Ablaufdiagramms;
- Fig. 3: ein Ausführungsbeispiel einer Datenstruktur eines erfindungsgemäßen Lizenzkenners in schematischer Darstellung; und
- Fig. 4: ein Ausführungsbeispiel einer erfindungsgemäßen Anordnung mit einem erfindungsgemäßen IoT-Gerät in schematischer Darstellung.

Einander entsprechende Teile sind in allen Figuren mit den gleichen Bezugszeichen versehen.

Die von W3C spezifizierten Abläufe und Rollen gemäß Verifizierbaren Berechtigungsnachweisen VC und Dezentralisierten Kennungen (Decentralized Identifiers, kurz DID) werden im Weiteren abgekürzt als DID/VC und der entsprechende Verifizierbare Berechtigungsnachweis kurz als VC bezeichnet.

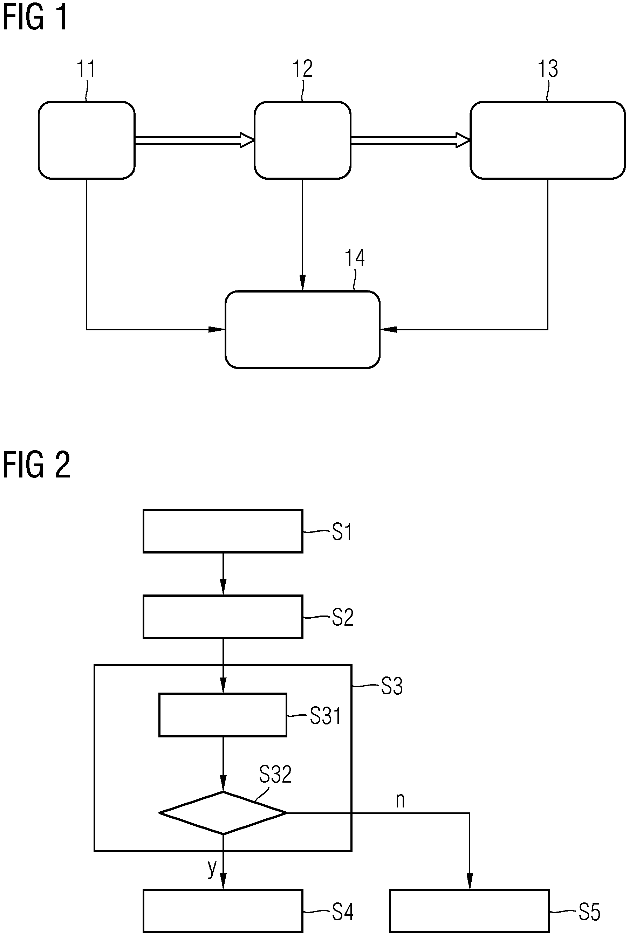

Aufgrund der anderen Zielsetzung im Falle der Lizenzprüfung verglichen mit der üblichen Nutzung von DID/VC bei einer Authentisierung zwischen Nutzern/Knoten sind jedoch Anpassungen der Basistechnologie notwendig. In einer VC-Lösung nach dem Stand der Technik, siehe Fig. 1 werden die Rollen Aussteller 11, Issuer genannt, Halter 12, Holder genannt, Verifizierer 13, Verifier genannt und Subjekt 14 (Subject) unterschieden. Ein Aussteller 11 stellt ein Verifizierbaren Berechtigungsnachweis VC aus und stellt dies einem Halter 12 bereit. Der Halter 12 verwendet das VC, um eine Verifiable Presentation zu bilden, mit der er gewisse durch die VC vom Aussteller 11 bestätigte Attribute (Eigenschaften, Claims) gegenüber einem Verifizierer 13 nachweisen kann. In einem Spezialfall kann ein VC auch direkt als Verifiable Presentation verwendet werden. Die durch das VC bestätigten Attribute sind dem Subjekt zugeordnet. Allgemein kann der Halter 12 selbst das Subjekt darstellen. Es kann jedoch auch den Halter 12 eines VC stellvertretend für ein Subjekt Attribute des Subjekts bestätigen. Eine Verifizierbare-Daten-Registry 14 speichert Kennungen und Verwendungsschemas.

Bei der vorliegenden Lizenzierungslösung gibt es jedoch andere Rollen und andere Zielsetzungen. Unterschiedlich ist einerseits das Konzept eines Ausstellers einer Lizenzinformation, üblicherweise der Hersteller des IoT-Geräts oder einer Software, die ein virtuelles IoT-Gerät realisiert. Das Gerät/Software nimmt eine unterschiedliche Rolle ein, indem es abhängig von der Lizenzinformation gewisse Leistungsmerkmale aktiviert oder deren Verwendung freigibt. Des Weiteren ist die Zielsetzung nicht zu prüfen, ob ein Zugreifender berechtigt ist, sondern zu prüfen, ob die konkrete Instanz, d.h. das Gerät/Software, die die Überprüfung selbst durchführt, das Feature aktivieren darf oder nicht. Es findet kein Zugriff durch einen Zugreifenden statt, wie im Falle eines Zugriffskontrollsystems, wofür VC entwickelt wurden.

Folgende Aspekte können jedoch aus einer VC/DID-Lösung in das erfindungsgemäße Lizenzprüfungsverfahren übernommen werden. Eine Lizenzausstellungseinheit kann die Rolle des VC Ausstellers 11 übernehmen und Lizenzkenner basierend auf VCs generieren, die die Lizenzierungsinformation generieren. Das IoT-Gerät/Software kann die Rolle des VC-Verifizierers 13 übernehmen und den Lizenzkenner, d.h. ein bereitgestelltes modifizierter VC beziehungsweise genaugenommen eine Verifiable Presentation VP überprüfen und davon abhängig eine Funktionalität im IoT-Gerät/Software freigeben oder aktivieren.

Da sich eine Lizenzprüfung jedoch konzeptionell von einer klassischen Zugriffskontrolle unterscheidet, können die Konzepte "Subject" und "Holder" von Verifiable Credentials VC nicht unverändert auf Rollen einer Lizenzprüfung abgebildet werden.

Es werden daher Anpassungen vorgeschlagen, um eine Lizenzierungslösung unter Nutzung von VC zu realisieren. Die Grundidee besteht darin, dass das IoT-Gerät, das die Lizenzierungsprüfung durchführt, die VC-Rollen des Verifizierers 13 und des Halters 12 und ggf. zusätzlich des Subjekts kombiniert. Es führt intern einen Pseudozugriff aus, der einem freischaltbaren Leistungsmerkmal zugeordnet ist. Abhängig davon, ob der Zugriff entsprechend eines vorliegenden Lizenzkenners, der auf einer Struktur des VC basiert, zulässig ist, wird das Leistungsmerkmal aktiviert oder freigeschaltet.

Anhand Fig. 2 wird ein Ausführungsbeispiel des Verfahrens beschrieben.

Zur Überprüfung einer Lizenz für die Nutzung mindestens eines Leistungsmerkmals in einem Internet der Dinge (IoT)-Gerät wird in einem ersten Verfahrensschritt S1 mindestens einer Lizenzbedingung für die Nutzung des Leistungsmerkmals des I-oT-Geräts durch mindestens ein im Lizenzkenner enthaltenes Attribut festgelegt. Anschließend wird der Lizenzkenner auf das IoT-Gerät übertragen und dort gespeichert, siehe S2. Im nachfolgenden Verfahrensschritt S3 werden nun die Lizenzbedingungen geprüft.

Dazu erzeugt eine auf dem IoT-Gerät ausgebildete Pseudo-Halter-Funktion einen Pseudozugriff auf das dem Lizenzkenner zugeordneten dem Leistungsmerkmal, siehe Schritt S31. Anschließend wird in Schritt S32 durch die Verifizierungseinheit des IoT-Geräts überprüft, ob der Pseudozugriff durch die Pseudo-Halter-Einheit berechtigt ist. Dazu werden von der Verifizierungseinheit die Attribute des Lizenzkenners geprüft. Resultiert aus der Prüfung der Attribute ein positives Prüfergebnis, d.h. werden die als bestätigt im Lizenzkenner angegebenen Attribute von einer Ausführungsplattform des Leistungsmerkmals erfüllt, wird das Leistungsmerkmal aktiviert, siehe Schritt S4. Ist das Prüfungsergebnis negativ und mindestens eines der Attribute nicht erfüllt, so wird die Aktivierung des Leistungsmerkmals verweigert und somit nicht ausgeführt. Dabei werden für die Prüfung des Lizenzkenners, insbesondere der Lizenzkenner, die Pseudo-Halter-Einheit und die Verifizierungseinheit Prozesse und Abläufe basierend auf einer Spezifikation zu Verifizierbaren Berechtigungsnachweisen (Verifiable Credentials) des World Wide Web Konsortiums (W3C) ausgebildet.

Das IoT-Gerät ist als ein physisch eigenständig vorliegendes Gerät ausgebildet oder als ein auf einer oder mehreren Hardware-Plattformen verteiltes Software-basierte virtuelles Gerät ausgebildet. Der Pseudozugriff kann insbesondere zum Zeitpunkt des Starts des IoT-Geräts erfolgen. Optional können im laufenden Betrieb weitere Pseudozugriffe wiederholt werden, und abhängig vom Ergebnis ein Leistungsmerkmal zu einem späteren Zeitpunkt aktiviert oder freigegeben werden, oder bei negativem Ergebnis deaktiviert oder gesperrt werden. Die Pseudo-Halter-Einheit kann beispielsweise als Teil einer Software-Anwendung, als Teil einer Ausführungsumgebung der Software-Anwendung oder durch ein Betriebssystem des IoT-Geräts ausgebildet sein. Der Halter wird als Pseudo-Halter-Einheit bezeichnet, da es sich dabei nicht um einen Zugreifenden handelt, sondern lediglich um eine lokale Einheit, die den Lizenzkenner der Verifizierungseinheit bereitstellt.

Der Pseudo-Halter-Einheit kann auf der Plattform der Verifizierungseinheit selbst realisiert sein, oder alternativ als separate, mit der Plattform lokal verbundene Komponente realisiert sein. Die Plattform der Verifizierungseinheit und die Pseudo-Halter-Einheit können dabei lokal über eine direkte Schnittstelle wie z.B. USB, RS232, PCIe, I2C, SPI, Glasfaser verbunden sein, oder über eine lokale Ethernet-, lokale Bluetooth- oder lokale WLAN-Schnittstelle verbunden sein.

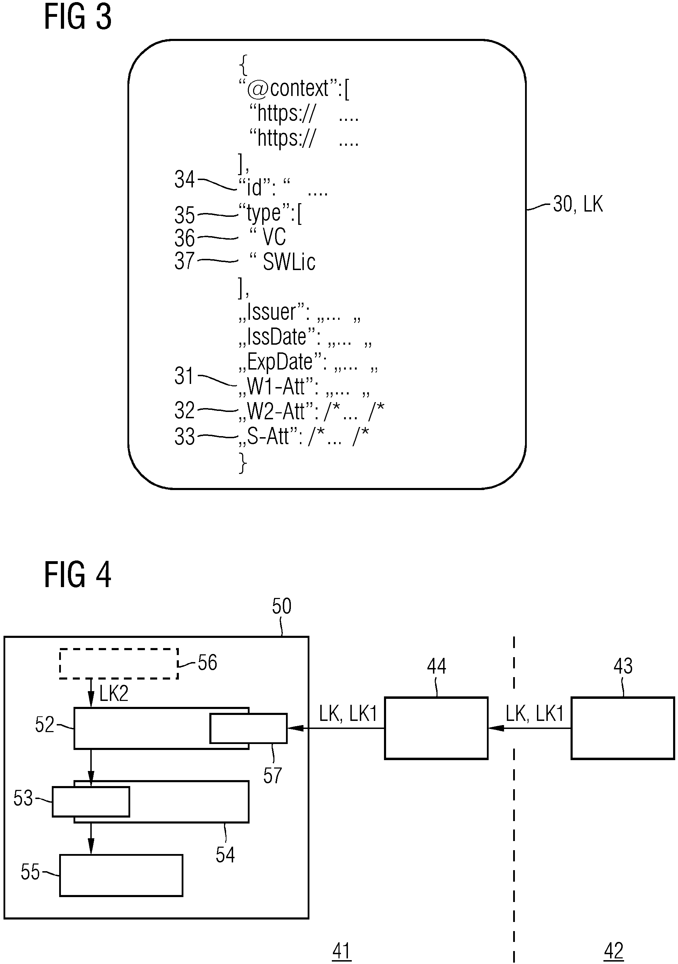

Die Lizenzprüfung, siehe S3 in Fig. 2, wird durch die Verifizierungseinheit des IoT-Geräts durchgeführt. In der nachfolgenden Beschreibung wird auf das in Fig. 4 dargestellte IoT-Gerät 50 referenziert. Das IoT-Gerät 50 umfasst eine Pseudo-Halter-Einheit 52, eine Verifizierungseinheit 52 sowie eine Hardware-Komponente 55, beispielsweise einen Vertrauensanker des IoT-Geräts. Die Pseudo-Halter-Einheit 52 empfängt den Lizenzkenner LK beispielsweise über eine Dienstschnittstelle 57 und speichert diesen ab.

Es wird auf der Plattform des IoT-Gerätes 50, beispielsweise einem Prozessor oder einem Software-Container oder einem Teil eines Software-Containers, auf der die Lizenzprüfung in einer Verifizierungseinheit 53 realisiert werden soll, die Pseudo-Halter-Einheit 52 realisiert, die den Lizenzkenner lädt und sie der Verifizierungseinheit 53 lokal bereitstellt. Der Lizenzkenner LK wird beispielsweise aus einem lokalen Dateisystem, über eine Konfigurationsschnittstelle, von einem Download-Server, von einem Device Management Server, von einer DID-Infrastruktur, von einer Datenbank, von einer verteilten Datenbankinfrastruktur oder von einem Web-Service bereitgestellt. Das Bereitstellen kann entweder von einer externen Einheit oder vom IoT-Gerät 50 oder einer Applikation auf dem IoT-Gerät initiiert werden. Die Pseudo-Halter-Einheit 52 realisiert den Pseudozugriff, der dazu dient, den mindestens einen relevanten Lizenzkenner LK zu erfassen und lokal der Verifizierungseinheit 53 bereitzustellen.

Die Pseudo-Halter-Einheit 52 kann den mindestens einen Lizenzkenner direkt oder modifiziert als Verifiable Presentation der Verifizierungseinheit 53 bereitstellen. Die Pseudo-Halter-Einheit 52 kann dabei auf dem IoT-Gerät 50 selbst, oder durch eine externe Komponente, die einen Aufruf an das IoT-Gerät 50 startet, realisiert sein.

Die Verifizierungseinheit 53 überprüft als erstes die Gültigkeit der Lizenz, die bevorzugt in Form eines Sicherheits-Attributs des Lizenzkenners LK bereitgestellt wird. Dabei wird das Sicherheit-Attribut kryptographisch verifiziert und überprüft, ob der Lizenzkenner LK von einer bekannten und vertrauenswürdigen Lizenzierungsstelle ausgestellt wurde.

Die Verifizierungseinheit 53 überprüft des Weiteren, ob das im Lizenzkenner LK enthaltene Wer-Attribut, das bevorzugt auf dem Subject Attribut des VC basiert, mit der aktuellen Ausführungsumgebung der Verifizierungseinheit 53 übereinstimmt. In einer Variante ermittelt die Verifizierungseinheit 53 Information zur aktuellen Ausführungsumgebung der Verifizierungseinheit 53 selbst. Diese Information kann beispielsweise eine Hardware-Kennung (Hardware-ID) sein. Das Wer-Attribut hat dabei nicht die herkömmliche Bedeutung eines VCs, sondern repräsentiert ein Prüfkriterium, insbesondere ein zur Aktivierung des Leistungsmerkmals berechtigtes IoT-Gerät, das durch die Verifizierungseinheit 53 selbst inhaltlich gegenüber einer Verifizierungs-Plattform-Kennung der Verifizierungsplattform, überprüft wird.

Dieser Schritt ist optional, da das Wer-Attribut nicht belegt sein muss. Im Falle von Lizenzen, die nicht an eine bestimmte Ausführungsumgebungen, z.B. Geräteinstanz gebunden, sind, ist das Wer-Attribut frei bzw. unbestimmt. Statt des Attributs "Subject" kann auch ein anders benanntes Attribut in einem VC verwendet werden, um im Lizenzkenner LK die Ziel-Ausführungsumgebung zu spezifizieren.

Des Weiteren wird ein Was-Attribut im Lizenzkenner LK durch die Verifizierungseinheit 53 überprüft. Das Was-Attribut gibt weitere Bedingungen zur Aktivierung des Leistungsmerkmals oder zur Aktivierung von Optionen des Leistungsmerkmals an. Das Was-Attribut wird bevorzugt durch das Attribut "Claim" eines VC repräsentiert. Die Verifizierungseinheit 53 akzeptiert den Lizenzkenner LK bzw. die daraus gebildete Verifiable Presentation nur, wenn die im Was-Attribut enthaltenen Bedingungen, die die betreffende zulässige Ausführungsumgebung charakterisieren, mit den ermittelten Charakteristika der Ausführungsumgebung übereinstimmen. Dazu erfolgt eine Prüfung der Leistungsmerkmale im IoT-Gerät, um zu ermitteln, welches der Leistungsmerkmale durch diesen Lizenzkenner LK freigeschaltet wird. Dazu wird eine Liste von möglichen Leistungsmerkmal-Parametern geprüft. Es wird geprüft, ob sie durch das Was-Attribut im Lizenzkenner LK als zutreffend bestätigt werden. Falls dies der Fall ist, werden nur die im Lizenzkenner LK als zulässig angegebenen Leistungsmerkmale durch die Verifizierungseinheit 53 aktiviert oder freigegeben.

Fig. 3 zeigt ein Beispiel eines Ausführungsbeispiel einer erfindungsgemäßen Datenstruktur eines Lizenzkenners 30 in einer maschinenlesbaren Kodierung von Lizenzbedingungen. Der Lizenzkenner 30 In einem Parameter "@context" wird bevorzugt auf die Spezifikation des W3C Verifiable Credential verwiesen. Das Dokument enthält für Verifiable Credentials typischen Attribute. Im Attribut "id" 34 wird ein eindeutiger Identifikator für eine Lizenz angegeben. Für eine automatisierbare Auswertung wird im Attribut "type" 35 unter dem Referenzzeichen 36 ein Verifiable Credential VC und unter dem Referenzzeichen 37 ein Lizenzkenner mit "SWLic" angegeben. Die Attribute "Issuer", "IssDate" und "ExpDate" enthalten Angaben zu einer den Lizenzkenner 30 ausstellende Lizenzausstellungseinheit oder allgemein einen Lizenzgeber, einem Ausstellungsdatum sowie dessen Ablaufdatum. Das Attribut "ExpDate" ist lediglich im Falle eines zeitlich befristeten Lizenzkenners befüllt.

Der Lizenzkenner 30 umfasst das Wer-Attribut W1-Att 31, ein Was-Attribut W2-Att 32 und ein Sicherheitsattribut S-Att 33. Das Wer-Attribut W1-Att 31 ist typischerweise im "Subjekt"-Attribut, ein Was-Attribut W2-Att 32 im "Claim"-Attribut und ein Sicherheitsattribut S-Att 33 im "Proof"-Attribut eines VC enthalten.

Da es bei der Lizenzprüfung keinen Zugreifenden im klassischen Sinn des VC gibt, kann das Wer-Attribut 31 bzw. eine Subjekt-Angabe im Lizenzkenner 30 fehlen, oder anderweitig verwendet werden, beispielsweise, um eine Information zur Zielangabe zu kodieren. Vorzugsweise wird das Wer-Attribut 31 jedoch verwendet, um eine explizite Zielangabe zu kodieren. Dies ist beispielsweise das IoT-Gerät 50, für welches die Lizenz bestimmt ist. In einer weiteren erfindungsgemäßen Ausführungsvariante können in das Wer-Attribut 31 noch weitere Umgebungsinformationen wie beispielsweise eine Betreiber-ID, Ort, Laufzeitumgebung, Software-Applikation, Gerätetyp, Version aufgenommen werden.

Wie bereits weiter oben erwähnt zeigt Fig. 4 ein Ausführungsbeispiel einer erfindungsgemäßen Anordnung umfassend das IoT-Gerät 50, beispielsweise ein industrielles Gerät und eine externe Lizenzausstellungseinheit 43. Das Gerät 50 ist in einer Umgebung eines Lizenzgebers 41, beispielsweise einer Fabrik angeordnet. Die Lizenzausstellungseinheit 43 ist beispielsweise in einer Umgebung eines Bereitstellers 42 der Anwendung bzw. des Leistungsmerkmals, beispielsweise in einem Cloud Backend, angeordnet. Das Gerät 50 umfasst eine Pseudo-Halter-Einheit 52 mit einer Speichereinheit, eine Verifizierungseinheit 53 sowie eine Hardware-Komponente 55, die beispielsweise einen Vertrauensanker ausbildet und Parameter der Hardware-Komponente 55 bestätigt. Die Lizenzausstellungsvorrichtung 43 erstellt bzw. bestätigt den Lizenzkenner LK und übermittelt diesen an das IoT-Gerät 50. Dies kann über eine Herstellungsbetriebsmanagement-Einheit 44 erfolgen.

Ein Leistungsmerkmal, beispielsweise eine Applikation, startet und ist betriebsbereit, führt jedoch noch keinerlei Funktionalität aus, für die eine Lizenz erforderlich ist.

Der Lizenzkenner LK bestätigt nicht nur positiv Attribute als zutreffend, sondern definiert in einer Ausführungsvariante zusätzlich notwendige Zusatz-Überprüfungen, die von der Verifizierungseinheit 53 überprüft werden. Die im Lizenzkenner LK positiv bestätigten Attribute dürfen nur unter der Voraussetzung als zutreffend verwendet werden, wenn die definierten Zusatz-Überprüfungen als zutreffend überprüft werden. Dies erfolgt unabhängig von einem Verifiable Credentials-System, oder unter Prüfung weiterer Verifiable Credentials.

In einer Variante stellt eine zweite lokal auf der Ausführungsebene des virtuellen oder des physisch realen IoT-Geräts 50 angeordnete Lizenzausstellungseinrichtung 56 einen zweiten Lizenzkenner LK2 bereit, der Eigenschaften der Ausführungsumgebung bestätigt, in welcher die Verifizierungseinheit 53 ausgeführt wird. Dieser zweite Lizenzkenner LK2 kann auch als VC-Plattforminformation bezeichnet werden, da es bestätigt, auf welcher Plattform eine Funktionalität, hier die Verifizierungseinheit 53 ausgeführt wird. Die Verifizierungseinheit 53 überprüft in diesem Fall, ob die Angaben zur erforderlichen Ausführungsumgebung im zweiten Lizenzkenner mit den Angaben zur tatsächlichen Ausführungsumgebung in einer VC-Plattforminformation übereinstimmen.

Bei der Nutzung eines Lizenzkenners, der als anonymer Verifizierbarer Berechtigungnachweis ausgebildet ist, auf einem Privacy preserving credential basiert und im weiteren als anonymer Lizenzkenner bezeichnet wird, kann weiterhin eine spezielle Art der Prüfung erfolgen: Der anonyme Lizenzkenner ermöglicht lediglich zu ermitteln, ob bestimmte Attribute vorliegen, d.h. als zutreffend durch den anonymen Lizenzkenner, in Form eines verifiable Credentials VC oder einer verifiable Presentation, bestätigt werden. Die Information kann aber nicht direkt ausgelesen werden wie bei explizit kodierten Lizenzkenner-Datenstrukturen, sondern es kann nur durch Prüfen ermittelt werden, ob ein bestimmtes Attribut als zutreffend durch den anonymen Lizenzkenner bestätigt wird. Ein anonymer Lizenzkenner repräsentiert manipulationsgeschützt und Privacy-geschützt die von der Lizenzausstellungseinheit 43 bestätigten Aussagen. Die Prüfung erfolgt ähnlich wie allgemein oben beschrieben. Der Unterschied besteht darin, dass der anonyme Lizenzkenner bzw. dessen verifiable Presentation die entsprechende Information nicht in explizit kodierter Form in den Attributen enthält, sondern in einer Privacygeschützten Form, die nur zulässt, das Vorhandensein von Attributen abzuprüfen.

In einer Weiterbildung enthält der Lizenzkenner zusätzlich eine Meta-Information, die den Umfang der "Scope"-Prüfung definiert, d.h. die Menge der zu überprüfenden Attribute definiert.

Für die Durchführung der Lizenzprüfung, auch License Enforcement genannt, wird die Gültigkeit des Lizenzkenners durch Verifikation des Sicherheits-Attributs, d.h. eine Signatur des Lizenzgebers bzw. der Lizenzausstellungsstelle 43 durchgeführt. Zusätzlich wird je nach den zu prüfenden Lizenzkriterien noch eine Laufzeitumgebung 54 geprüft. In dem in Fig. 4 gezeigten Beispiel ist die Lizenz an eine bestimmte Hardware-Instanz gebunden. Diese kann ebenfalls kryptographisch verifiziert werden, wozu Berechtigungsnachweise der Hardware Instanz, auch Credentials genannt, beispielsweise über einen Hardware-basierten oder Hardware-gebundenen Vertrauensanker 55 geschützt genutzt werden. Zur Prüfung einer Einsatzumgebung kann die Lizenzprüfung z.B. auch die Prüfung einschließen, dass die Applikation nur in einer gültigen Kundenumgebung betrieben wird. Hierzu ist beispielhaft ein "client"-Attribut als Teil des Wie-Attributs 32 vorgesehen. Kodiert ist es durch ein DID. Die Prüfung kann z.B. dadurch geschehen, dass ein zusätzlicher dritter Lizenzkenner übergeben wird, welche den Lizenzinhaber ausweist.

Das gezeigte Lizenzprüfungsverfahren kann z.B. für die Verwaltung / Steuerung von Container-Infrastrukturen effizient eingesetzt werden. So können Container bzw. ein Container-Image oder ein Virtual-Machine-Image oder eine Applikation nur dann gestartet werden, wenn entsprechende VC (die die Lizenz ausdrücken) vorliegen. Weiterhin können auch Funktionalitäten einer App-Ausführungsumgebung (Runtime Environment RTE, insbesondere einer Edge-Komponente) wie z.B. Load-Balancing, Migration laufender Instanzen, Fail Over, Full Memory Encryption, Disk Encryption, Confidential Computing abhängig von einer VC-Lizenz aktiviert werden. Weiterhin kann die Nutzung von Hardware-Beschleunigern, z.B. einem Grafikprozessor GPU, einem AI-Beschleuniger, einem Crypto-Beschleuniger oder einem Netzwerk-Beschleuniger, abhängig von einer VC-Lizenzinformation freigegeben werden.

Im Anschluss an eine erfolgreiche Lizenzvalidierung kann der Lizenzkenner geräteseitig gespeichert werden. Hierdurch kann nach einem Neustart des IoT-Geräts / der Applikation eine erneute Lizenzprüfung beim Start erfolgen, so dass keine erneute Initialisierung erforderlich ist. Lizenzkenner können also ähnlich wie Lizenzdateien verwendet werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Überprüfung einer Lizenz für die Nutzung mindestens eines Leistungsmerkmals in einem Internet der Dinge (IoT)-Gerät (50) anhand eines Lizenzkenners (LK), umfassend
- Festlegen (S1) mindestens einer Lizenzbedingung für die Nutzung des Leistungsmerkmals des IoT-Geräts (50) durch mindestens ein im Lizenzkenner (LK) enthaltenes Attribut,
- Übertragen und Speichern (S2) des Lizenzkenners (LK) auf das IoT-Gerät (50),
- Prüfen (S3) der Lizenzbedingungen durch
a) Erzeugen (S31) eines dem Leistungsmerkmal des IoT-Geräts (50) zugeordneten Pseudozugriffs durch eine auf dem IoT-Gerät (50) ausgebildete Pseudo-Halter-Einheit (52), und
b) Überprüfen (S32) einer Berechtigung für den Pseudozugriff durch Prüfen der Attribute des Lizenzkenners (LK) durch eine auf dem IoT-Gerät (50) ausgebildete Verifizierungseinheit (53), und
- Aktivieren (S4) des mindestens einen Leistungsmerkmals, wenn der Pseudozugriff durch ein positives Prüfergebnis des Lizenzkenners (LK) als erlaubt bestätigt wird,
wobei der Lizenzkenner (LK), die Pseudo-Halter-Einheit (52) und die Verifizierungseinheit (53) basierend auf einer Spezifikation zu Verifizierbaren Berechtigungsnachweisen (Verifiable Credentials) eines ausgebildet sind.

2. Verfahren nach Anspruch 1, wobei der Lizenzkenner (LK) vor oder während dem Betrieb des IoT-Geräts (50) auf dem IoT-Gerät (50) gespeichert wird.

3. Verfahren nach einem der vorangehenden Ansprüche, wobei der Lizenzkenner (LK) während des Betriebs des IoT-Geräts (50) auf das IoT-Gerät (50) erneut übertragen und der gespeicherte Lizenzkenner (LK) ersetzt oder ergänzt wird.

4. Verfahren nach einem der vorangehenden Ansprüche, wobei der Pseudozugriff beim Start des IoT-Gerätes (50) oder beim Start des Leistungsmerkmals auf dem IoT-Gerät (50) erzeugt und überprüft wird und/oder der Pseudozugriff während des Betriebs wiederholt erzeugt und überprüft wird.

5. Verfahren nach einem der vorangehenden Ansprüche, wobei das IoT-Gerät (50) als ein physisch eigenständig vorliegendes Gerät ausgebildet ist oder als ein auf einer oder mehreren Hardware-Plattformen verteiltes Software-basiertes virtuelles Gerät ausgebildet ist.

6. Verfahren nach einem der vorangehenden Ansprüche, wobei die Pseudo-Halter-Einheit (52) des IoT-Geräts (50) als Teil einer Software-Anwendung, als Teil einer Ausführungsumgebung der Software-Anwendung oder durch ein Betriebssystem des IoT-Geräts (50) ausgebildet wird.

7. Verfahren nach einem der vorangehenden Ansprüche, wobei die Pseudo-Halter-Einheit (52) und die Verifizierungseinheit (53) auf einer gemeinsamen Plattform ausgebildet sind oder die Pseudo-Halter-Einheit (52) und die Verifizierungseinheit (53) auf unterschiedlichen, lokal miteinander verbundenen Plattformen ausgebildet sind.

8. Verfahren nach Anspruch 7, wobei durch die Verifizierungseinheit (53) ein Wer-Attribut (31) im Lizenzkenner (30, LK), das ein zur Aktivierung des Leistungsmerkmals berechtigtes IoT-Gerät (50) angibt, gegenüber einer Verifizierungs-Plattform-Kennung der Verifizierungsplattform, überprüft wird.

9. Verfahren nach einem der vorangehenden Ansprüche, wobei durch die Verifizierungseinheit (53) ein Was-Attribut (32) im Lizenzkenner (30, LK), das weitere Bedingungen zur Aktivierung des Leistungsmerkmals oder zur Aktivierung von Optionen des Leistungsmerkmals angibt, überprüft wird.

10. Verfahren nach einem der vorangehenden Ansprüche, wobei durch die Verifizierungseinheit (53) ein Sicherheits-Attribut (33) im Lizenzkenner (30, LK), das eine kryptographische Kennung eines Ausstellers des Lizenzkenners (30, LK) umfasst, geprüft wird.

11. Verfahren nach einem der Ansprüche 8 bis 10, wobei ein erster Lizenzkenner (LK1) von einer IoT-Geräte-externen und/oder ein zweiter Lizenzkenner (LK2) von einer IoT-Geräteinternen Lizenzerstellungseinheit ausgestellt und auf dem I-oT-Gerät (50) gespeichert wird, und
der erste Lizenzkenner (LK1) Eigenschaften der Ausführungsumgebung, in welcher die Verifizierungseinheit (53) ausgeführt wird, vorgibt,
der zweite Lizenzkenner (LK2) die tatsächlich im IoT-Gerät (50) vorliegenden Eigenschaften umfasst, und
der erste und zweite Lizenzkenner (LK1, LK2) durch die Verifizierungseinheit (53) gegenüber den Eigenschaften der vorliegenden Ausführungsumgebung der Verifizierungseinheit (53) überprüft werden.

12. Verfahren nach einem der vorangehenden Ansprüche, wobei der Lizenzkenner(LK) als anonymer Verifizierbarer Berechtigungsnachweis ausgebildet ist und die Verifizierungseinheit (53) lediglich ein Vorliegen von mindestens einem bestimmten Attribut, jedoch nicht den Inhalt des Attributs prüft.

13. Verfahren nach einem der vorangehenden Ansprüche, wobei das Leistungsmerkmal ein Software-Container ist, und der Lizenzkenner zur Verwaltung und Steuerung einer Software-Container-Infrastruktur verwendet wird oder das Leistungsmerkmal eine Software-Anwendung oder eine Hardware-Komponente des IoT-Gerätes ist.

14. Anordnung zur Überprüfung einer Lizenz für die Nutzung mindestens eines Leistungsmerkmals in einem Internet der Dinge (IoT)-Gerät (50) anhand eines Lizenzkenners (LK), umfassend
eine Lizenzausstellungseinheit (43), die derart ausgebildet ist
- mindestens eine Lizenzbedingung für die Nutzung des Leistungsmerkmals des IoT-Geräts (50) durch mindestens ein im Lizenzkenner (LK) enthaltenes Attribut festzulegen,
- den Lizenzkenner auf das IoT-Gerät (50) zu übertragen, und das IoT-Gerät (50) derart ausgebildet ist,
- den Lizenzkenner (LK) zu speichern,
- die Lizenzbedingungen zu prüfen durch
a) Erzeugen eines dem Leistungsmerkmal des IoT-Geräts (50) zugeordneten Pseudozugriffs durch eine auf dem IoT-Gerät (50) ausgebildete Pseudo-Halter-Einheit (52), und
b) Überprüfen einer Berechtigung für den Pseudozugriff durch Prüfen der Attribute des Lizenzkenners (LK) durch eine auf dem IoT-Gerät ausgebildete Verifizierungseinheit (53), und
- das mindestens eine Leistungsmerkmal zu aktivieren, wenn der Pseudozugriff durch ein positives Prüfergebnis des Lizenzkenners (LK) als erlaubt bestätigt wird,
wobei der Lizenzkenner (LK), die Pseudo-Halter-Einheit (52) und die Verifizierungseinheit (53) basierend auf eine Spezifikation zu Verifizierbaren Berechtigungsnachweisen (Verifiable Credentials) des World Wide Web Konsortiums (kurz W3C) ausgebildet sind.

15. Computerprogrammprodukt, umfassend ein nicht flüchtiges Computerlesbares Medium, das direkt in einen Speicher eines digitalen Computers ladbar ist, umfassend Programmcodeteile, die bei Ausführung der Programmcodeteile durch einen digitalen Computer diesen veranlassen, die Schritte des Verfahrens nach einem der Ansprüche 1 bis 13 durchzuführen.
